# EUROPEAN PATENT APPLICATION

(11) **EP 4 376 203 A1**
(43) Date of publication of application: **29.05.2024**
(21) Application number: 22876690.3
(22) Date of filing: 30.08.2022
(51) Int. Cl.: H01M 50/449, H01M 50/466, H01M 50/403, H01M 10/04

(54) **SEPARATOR LAMINATE, ELECTRODE ASSEMBLY COMPRISING SAME, AND METHOD FOR MANUFACTURING ELECTRODE ASSEMBLY**

(30) Priority: 30.09.2021 KR 20210130273
(71) Applicant: LG Energy Solution, Ltd., Seoul 07335 (KR)
(72) Inventor: HAN, Hyun Gyu, Daejeon 34122 (KR); KWON, Kyeong Keun, Daejeon 34122 (KR)
(74) Representative: Plasseraud IP
(86) International application number: PCT/KR2022/012985
(87) International publication number: WO 2023/054915

(57) **Abstract**

An electrode assembly according to an embodiment of the present invention includes: a separator stack which has a sealing portion formed in central regions of a plurality of separators stacked on each other, wherein the separator stack is folded about the sealing portion; and a plurality of electrodes inserted between the plurality of separators. The sealing portion may be positioned on one side of the plurality of electrodes.

## Description

### TECHNICAL FIELD

### CROSS-REFERENCE TO RELATED APPLICATION

The present application claims the benefit of the priority of Korean Patent Application No. 10-2021-0130273, filed on September 30, 2021, which is hereby incorporated by reference in its entirety.

### TECHNICAL FIELD

The present invention relates to a separator stack, an electrode assembly including same, and an electrode assembly manufacturing method.

### BACKGROUND ART

In general, secondary batteries refer to chargeable and dischargeable batteries unlike primary batteries that are not chargeable, and have been widely used in electronic devices, such as mobile phones, laptops, and camcorders, or electric vehicles, etc. In particular, a lithium secondary battery has a larger capacity than a nickel-cadmium battery or a nickel-hydrogen battery and has a high energy density per unit weight, and thus the degree of utilization of the lithium secondary battery is rapidly increasing.

The lithium secondary batteries are classified according to the configuration of an electrode assembly having a structure of positive electrode/separator/negative electrode. Representative examples include a jelly-roll electrode assembly in which long sheet-shaped electrodes are wound with separators disposed therebetween, a stack-type electrode assembly in which a plurality of electrodes cut into a certain size are sequentially stacked on each other with separators disposed therebetween, and a stack/folding-type electrode assembly having a structure in which bi-cells or full-cells formed by stacking certain unit electrodes with separators disposed therebetween are wound.

### DISCLOSURE OF THE INVENTION

### TECHNICAL PROBLEM

An object of the present invention is to provide an electrode assembly, which facilitates alignment of electrodes and has improved stability, and a separator stack included therein.

Another object of the present invention is to provide a method for manufacturing an electrode assembly using a novel stacking method of electrodes.

### TECHNICAL SOLUTION

A separator stack according to an embodiment of the present invention includes: a plurality of separators which are stacked on each other and each of which has a pair of first edges extending in a first direction and a pair of second edges extending in a second direction perpendicular to the first direction; and a sealing portion which is elongated in the second direction and formed as central regions of the plurality of separators in the first direction are sealed to each other.

The width of the sealing portion in the first direction may be reduced along the upward direction with respect to the stacking direction of the plurality of separators.

The pairs of second edges of the plurality of separators may be positioned further inward along the upward direction with respect to the stacking direction of the plurality of separators.

The sealing portion may have a shape symmetrical with respect to the first direction.

The plurality of separators may be folded about the sealing portion.

An electrode assembly according to an embodiment of the present invention includes: a separator stack which has a sealing portion formed in central regions of a plurality of separators stacked on each other, wherein the separator stack is folded about the sealing portion; and a plurality of electrodes inserted between the plurality of separators. The sealing portion may be positioned on one side of the plurality of electrodes.

At least some of the plurality of electrodes may be in contact with or close to the sealing portion.

The thickness of the sealing portion may be increased toward the central regions with respect to the stacking direction of the separator stack.

The sealing portion may have a shape symmetrical with respect to the stacking direction of the separator stack.

The outer surface of the sealing portion may be flat, or convexly bent or folded toward the outside of the separator stack.

The separator stack may have a sub-sealing portion which is positioned on the other side of the plurality of electrodes and in which the plurality of separators are sealed to each other, and the sub-sealing portion may have a shape asymmetrical with the sealing portion.

A separator stack according to another embodiment of the present invention includes: a base separator which has a pair of first edges extending in a first direction and a pair of second edges extending in a second direction perpendicular to the first direction; and a base material portion which is provided in a central region, in the first direction, of the base separator and elongated in the second direction; and a plurality of main separators which have fixed edges connected to the base material portion.

With respect to the first direction, some of the plurality of main separators may be spread toward one side, and the others may be spread toward the other side.

The base separator may be folded about the base material portion so that the plurality of main separators are gathered.

Non-fixed edges of the plurality of main separators on the opposite side from the fixed edges may be positioned further inward along the upward direction with respect to the stacking direction.

An electrode assembly according to another embodiment of the present invention includes: a separator stack in which edges of a plurality of main separators are fixed to a base material portion provided in a central region of a base separator, wherein the separator stack is folded about the base material portion; and a plurality of electrodes which are inserted between the base separator and the plurality of main separators. The base material portion may be positioned on one side of the plurality of electrodes.

The plurality of electrodes may be in contact with or close to the base material portion.

The thickness of the base material portion may be constant with respect to the stacking direction of the plurality of main separators.

The base material portion may be flat, or convexly bent or folded toward the outside of the separator stack.

The separator stack may have a sub-sealing portion which is positioned on the other side of the plurality of electrodes and in which the base separator and the plurality of separators are fused to each other, and the sub-sealing portion may have a shape asymmetrical with the base material portion.

An electrode assembly manufacturing method according to an embodiment of the present invention includes: preparing a separator stack in which central regions of a plurality of separators stacked on each other are sealed to each other to form a sealing portion; folding the separator stack about the sealing portion; and inserting a plurality of electrodes into spaces between the plurality of separators.

During the preparing of the separator stack, an operation of stacking another separator on the upper side of one separator and an operation of fusing central regions of the one separator and another separator to each other to form a sealing portion may be repeated. The width of the sealing portion may be reduced along the upward direction with respect to the stacking direction of the separator stack.

The electrode assembly manufacturing method may further include forming a sub-sealing portion by sealing the plurality of separators to each other on the opposite side from the sealing portion.

An electrode assembly manufacturing method according to another embodiment of the present invention includes: preparing a separator stack in which edges of a plurality of main separators are fixed to a base material portion provided in a central region of a base separator; folding the separator stack about the base material portion; and inserting a plurality of electrodes into spaces between the base separator and the plurality of main separators.

The electrode assembly manufacturing method may further include sealing edges of the base separator and plurality of main separators positioned on the opposite side from the base material portion to each other.

### ADVANTAGEOUS EFFECTS

According to the embodiments of the present invention, the manufacturing process is simplified, the manufacturing equipment is also simplified, compared to various methods for manufacturing electrode assemblies according to the related art.

Also, the separator stack that does not include the electrodes is manufactured first, and thus, the accurate alignment between the plurality of separators is possible. In addition, the plurality of electrodes are simultaneously or sequentially inserted into the separator stack, and thus, the accurate alignment between the plurality of electrodes is possible. Accordingly, the quality and energy density of the electrode assembly may be enhanced.

In addition, the sealing stability of the sealing portion or the base material portion provided in the separator stack is properly maintained, and thus, it is possible to prevent the plurality of electrodes from being separated from the separator stack. Accordingly, it is possible to prevent the occurrence of a short circuit between the plurality of electrodes and to improve the stability of the electrode assembly.

Furthermore, the thickness of the sealing portion or the base material portion provided in the separator stack is relatively smaller than the thickness of a separator sealing portion according to the related art, and thus, it is possible to efficiently dissipate heat from the plurality of electrodes.

In addition to the effects described above, effects that can be easily predicted by those skilled in the art from the configurations according to the embodiments of the present invention may be included.

### BRIEF DESCRIPTION OF THE DRAWINGS

FIG. 1 is a side view of a separator stack according to an embodiment of the present invention.
FIG. 2 is a plan view of the separator stack illustrated in FIG. 1.
FIG. 3 is a side view illustrating a state in which a plurality of electrodes are inserted into a separator stack according to an embodiment of the present invention.
FIG. 4 is an enlarged view of a region 'A' shown in FIG. 3.
FIG. 5 is a side view of an electrode assembly according to an embodiment of the present invention.
FIG. 6 is a flowchart of a method for manufacturing an electrode assembly according to an embodiment of the present invention.
FIG. 7 is a side view of a separator stack according to another embodiment of the present invention.
FIG. 8 is a side view illustrating a state in which a plurality of electrodes are inserted into a separator stack according to another embodiment of the present invention.
FIG. 9 is an enlarged view of a region 'B' shown in FIG. 8.
FIG. 10 is a side view of an electrode assembly according to another embodiment of the present invention.
FIG. 11 is a flowchart of a method for manufacturing an electrode assembly according to another embodiment of the present invention.
FIG. 12 is an exploded perspective view of a secondary battery that includes an electrode assembly according to an embodiment of the present invention.
FIG. 13 is a schematic view of a battery module that includes the secondary battery illustrated in FIG. 12.

### MODE FOR CARRYING OUT THE INVENTION

Hereinafter, embodiments of the present invention will be described in detail with reference to the accompanying drawings so as to be easily carried out by a person skilled in the art to which the present invention pertains. However, the present invention may be embodied in various different forms, and is neither limited nor restricted to the following embodiments.

In order to clearly describe the present disclosure, detailed description of parts irrelevant to the disclosure or detailed descriptions of related well-known technologies that may unnecessarily obscure subject matters of the disclosure will be omitted. In the specification, when reference numerals are given to components in each of the drawings, the same or similar components will be designated by the same or similar reference numerals throughout the specification.

Also, terms or words used in this specification and claims should not be restrictively interpreted as ordinary meanings or dictionary-based meanings, but should be interpreted as meanings and concepts conforming to the technical ideas of the present disclosure on the basis of the principle that an inventor can properly define the concept of a term so as to describe his or her invention in the best ways.

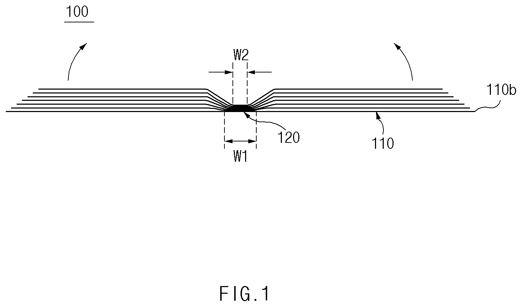

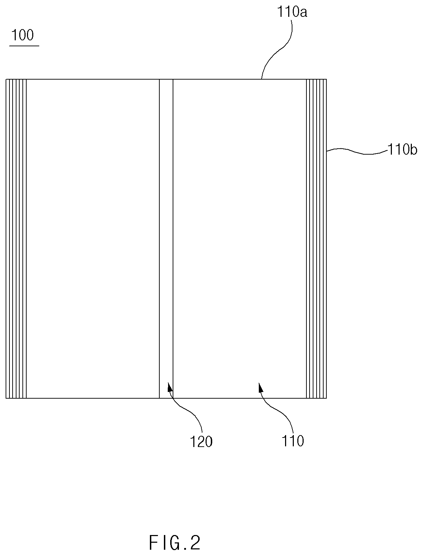

FIG. 1 is a side view of a separator stack according to an embodiment of the present invention, and FIG. 2 is a plan view of the separator stack illustrated in FIG. 1.

A separator stack 100 according to an embodiment of the present invention may include a plurality of separators 110 stacked on each other and a sealing portion 120 formed by sealing central regions of the plurality of separators 110 to each other.

Each of the separators 110 may include a pair of first edges 110a extending in a first direction and a pair of second edges 110b extending in a second direction perpendicular to the first direction. Therefore, the pair of second edges 110b of each separator 110 may form both ends of the separator 110 in the first direction.

The first direction may be parallel to one of the longitudinal direction or width direction of the separator 110, and the second direction may be parallel to the other one of the longitudinal direction or width direction of the separator 110.

The sealing portion 120 may be formed as the central regions of the plurality of separators 110 in the first direction are sealed to each other. The sealing portion 120 may be elongated in the second direction.

The width of the sealing portion 120 in the first direction may be reduced along the upward direction with respect to the stacking direction of the plurality of separators 110. That is, a lower width w1 of the sealing portion 120 may be greater than an upper width w2 thereof.

Accordingly, the thickness of the sealing portion 120 with respect to the stacking direction of the plurality of separators 110 may be increased toward the central regions with respect to the first direction.

Also, the sealing portion 120 may have a shape symmetrical with respect to the first direction. Both ends of the sealing portion 120 in the first direction may be positioned further inward along the upward direction with respect to the stacking direction of the plurality of separators 110.

To this end, a sealing portion 120 may be formed each time each separator 110 is sealed. Also, as the separators 110 are stacked, the width of the sealing portion 120 may be gradually decreased.

In more detail, when a second separator 110 is stacked on a first separator 110, a sealing portion 120 having a first width may be formed by sealing the central regions of the first separator 110 and the second separator 110 to each other. Subsequently, when a third separator 110 is stacked on the second separator 110, a second sealing portion 120 having a second width smaller than the first width may be formed by sealing the central regions of the second separator 110 and the third separator 110 to each other. Here, the first to third separators are arbitrary names to describe the stacking order of the separators, not specific separators.

The plurality of separators 110 are stacked and sealed by repeating the above process, and thus, it is possible to form the separator stack 100 in which the width of the sealing portion 120 is reduced along the upward direction.

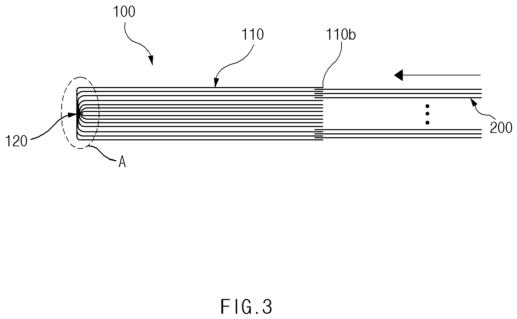

Also, the separator stack 100, more specifically, the plurality of separators 110 may be folded about the sealing portion 120 (see FIG. 3). Therefore, the length of the separator stack 100 in the first direction may be reduced by about half, and the height in the stacking direction may be increased by about two times.

In more detail, the separator stack 100 may be folded in a direction such that one portion and another portion of the last separator 110 stacked last among the plurality of separators 110 face each other. Therefore, the one portion and another portion of the last separator 110 may be positioned in the central region, in the stacking direction, of the folded separator stack 100 and may face each other. In addition, one portion and another portion of the initial separator 110 stacked first among the plurality of separators 110 may form both outermost regions of the folded separator stack 100.

That is, the separator stack 100 according to the embodiment may have a similar structure to a book in bound form. The initial separator 110 may correspond to the cover of the book, and another separator 110 may correspond to each page of the book.

The folded separator stack 100 will be described later in detail.

Meanwhile, the pairs of second edges 110b of the plurality of separators 110 may be positioned further inward along the upward direction with respect to the stacking direction of the plurality of separators 110. That is, the lengths between the pairs of second edges 110b of the plurality of separators 110 may be reduced along the upward direction with respect to the stacking direction. Accordingly, when the separator stack 100 is folded about the sealing portion 120 (see FIG. 3 ), the lengths from the sealing portion 120 to the plurality of second edges 110b with respect to the plurality of separators 110 may be the same or similar to each other.

However, the embodiment is not limited thereto, and a plurality of separators 110 having the constant length may be stacked. In this case, in a state in which the separator stack 100 is folded about the sealing portion 120, a process of cutting a portion of the separator stack 100 may be further performed so that the lengths from the sealing portion 120 to the plurality of second edges 110b are the same or similar to each other.

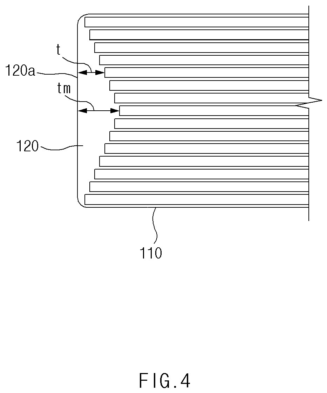

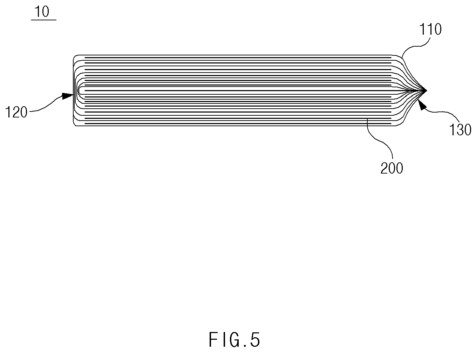

FIG. 3 is a side view illustrating a state in which a plurality of electrodes are inserted into a separator stack according to an embodiment of the present invention, FIG. 4 is an enlarged view of a region 'A' shown in FIG. 3, and FIG. 5 is a side view of an electrode assembly according to an embodiment of the present invention.

An electrode assembly 10 according to an embodiment of the present invention may include the separator stack 100 which is folded about the sealing portion 120 and a plurality of electrodes 200 which are inserted between the plurality of separators 110.

Hereinafter, the separator stack 100 will be described based on a folded state.

The sealing portion 120 may be positioned on one side of the separator stack 100, and the second edges 110b of the plurality of separator 100 may be positioned on the other side.

The shape of the sealing portion 120 may vary depending on the degree to which the separator stack 100 is folded. In one example, an outer surface 120a of the sealing portion 120 may be formed flat as illustrated in FIG. 4. In another example, the outer surface 120a of the sealing portion 120 may be convexly bent or folded toward the outside of the separator stack 100.

The outer surface 120a of the sealing portion 120 may form a portion of the perimeter of the separator stack 100.

A thickness t of the sealing portion 120 may be increased toward the central region with respect to the stacking direction of the separator stack 100. Therefore, the sealing portion 120 may have a maximum thickness tm in the central region in the stacking direction of the separator stack 100.

Here, the thickness t of the sealing portion 120 may represent a distance from a point, at which each of the separators 110 is connected to the sealing portion 120, to the outer surface 120a of the sealing portion 120, with respect to the direction perpendicular to the outer surface 120a of the sealing portion 120. For example, when the outer surface 120a of the sealing portion 120 is flat, the thickness t of the sealing portion 120 may be parallel to the first direction.

The sealing portion 120 may have a shape symmetrical with respect to the stacking direction of the separator stack 100.

Also, the sealing portion 120 may be positioned on one side of the plurality of electrodes 200. At least some of the plurality of electrodes 200 may be in contact with or close to the sealing portion 120. The sealing portion 120 may prevent the plurality of electrodes 200 from being separated from the separator stack 100.

The plurality of electrodes 200 may be inserted between the plurality of separators 110 included in the separator stack 100. The plurality of electrodes 200 may include a plurality of positive electrodes and a plurality of negative electrodes which are positioned alternately with the separators 110 therebetween.

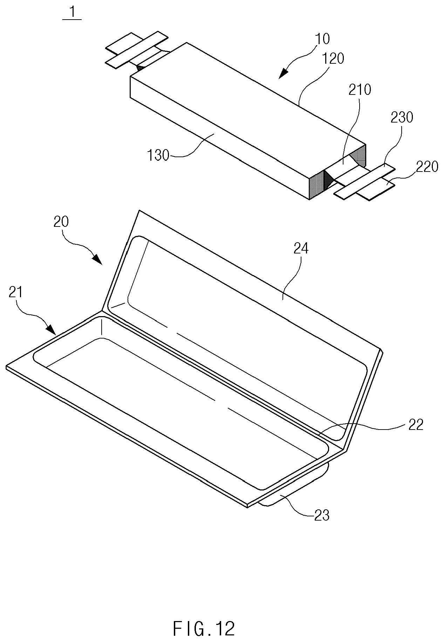

Each of the electrodes 200 may be formed by applying an electrode active material onto a current collector having an electrode plate shape. Also, an electrode tab 210 (see FIG. 12) may be connected to each of the electrodes 200, and the electrode tab 210 may be an uncoated portion which is not coated with the electrode active material in the current collector.

A plurality of electrode tabs 210 may protrude toward one side or both sides of the electrode assembly 10. In more detail, the plurality of electrode tabs 210 may include positive electrode tabs connected to the positive electrodes and negative electrode tabs connected to the negative electrodes. The positive electrode tabs and the negative electrode tabs may protrude in parallel to each other or in opposite directions.

The plurality of electrode tabs 210 may protrude in a direction not interfering with the sealing portion 120 of the separator stack 100 and a sub-sealing portion 130 thereof which will be described later.

Meanwhile, the separator stack 100 may include a sub-sealing portion 130.

The sub-sealing portion 130 may be positioned on the opposite side from the sealing portion 120 with the plurality of electrodes 200 therebetween. That is, the sealing portion 120 may be positioned on one side of the plurality of electrodes 200, and the sub-sealing portion 130 may be positioned on the other side of the plurality of electrodes 200.

The sub-sealing portion 130 may be formed by sealing the plurality of separators 110 to each other. In more detail, the sub-sealing portion 130 may be formed by sealing the second edges 110b of the plurality of separators 110 to each other.

More specifically, in the sub-sealing portion 130, the second edges 110b of the plurality of separators 110 may be gathered at the central region and heat-sealed by a separate sealing tool (not shown) or may be folded in random directions and heat-sealed. Therefore, when the sub-sealing portion 130 is formed, the sub-sealing portion 130 inevitably has a shape asymmetrical with the sealing portion 120.

However, the sub-sealing portion 130 may not be formed in the separator stack 100.

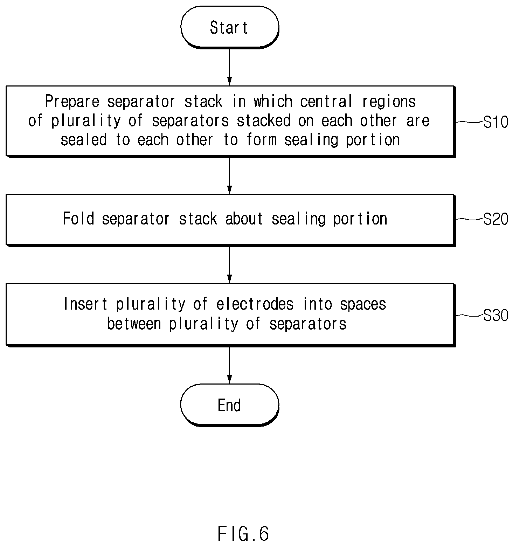

FIG. 6 is a flowchart of a method for manufacturing an electrode assembly according to an embodiment of the present invention.

A method for manufacturing an electrode assembly 10 according to an embodiment of the present invention may include preparing a separator stack 100 in which central regions of a plurality of separators 110 stacked on each other are sealed to each other to form a sealing portion 120 (S10), folding the separator stack 100 about the sealing portion 120 (S20), and inserting a plurality of electrodes 200 into spaces between the plurality of separators 110 (S30).

During the preparing of the separator stack 100 (S10), the sealing portion 120 may be formed in the central regions, in a first direction, of the plurality of separators 110, and the sealing portion 120 may be elongated in a second direction perpendicular to the first direction.

During the preparing of the separator stack 100 (S10), an operation of stacking another separator 120 on the upper side of one separator 110 and an operation of fusing central regions of the one separator 110 and another separator 110 to each other to form a sealing portion 120 may be repeated. Also, the width of the sealing portion 120 may be reduced along the upper direction with respect to the stacking direction of the separator stack 100.

Therefore, the sealing portion 120 formed at the center of the separator stack 100 may have a shape of which the width is reduced along the upper direction with respect to the stacking direction of the separator stack 100.

During the folding of the separator stack 100 (S20), the separator stack 100 may be folded about the sealing portion 120 that is elongated in the second direction. In more detail, the separator stack 100 may be folded in a direction such that one portion and another portion of the last separator 110 stacked last among the plurality of separators 110 face each other.

Therefore, when the separator stack 100 is folded, the sealing portion 120 may be positioned on one side of the separator stack 100. Also, a thickness t (see FIG. 5) of the sealing portion 120 may be increased toward the central region with respect to the stacking direction of the separator stack 100.

Also, the shape of the sealing portion 120 may vary depending on the degree to which the separator stack 100 is folded.

In one example, when the separator stack 100 is folded, the sealing portion 120 itself may not be folded, and thus, the shape of the sealing portion 120 may be maintained. In this case, an outer surface 120a of the sealing portion 120 may be flat.

In another example, when the separator stack 100 is folded, the sealing portion 120 may be bent together with the plurality of separators 110. In this case, the outer surface 120a of the sealing portion 120 may be convexly bent or folded toward the outside of the separator stack 100.

During the inserting of the plurality of electrodes 200 (S30), the plurality of electrodes 200 may be simultaneously inserted or sequentially inserted into the separator stack 100.

For example, a plurality of guide slits (not shown) may be inserted between the plurality of separators 110, and each of the electrodes 200 may be inserted into the separator stack 100 via the guide slit. Subsequently, the guide slits may be removed.

Accordingly, the sealing portion 120 of the separator stack 100 may be positioned on one side of the plurality of electrodes 200, and may be in contact with or close to at least some of the plurality of electrodes 200.

Also, electrode tabs 210 (see FIG. 12) provided in the plurality of electrodes 200 may protrude to the outside of the separator stack 100. In more detail, the electrode tabs 210 may protrude in a direction not interfering with the sealing portion 120.

Meanwhile, although not illustrated in FIG. 6, the method for manufacturing the electrode assembly 10 according to the embodiment may further include forming a sub-sealing portion 130 by sealing the plurality of separators 110 to each other on the opposite side from the sealing portion 120.

In more detail, the second edges 110b of the plurality of separators 110 may be sealed to each other by a separate sealing tool (not shown) to form the sub-sealing portion 130. The sealing portion 120 and the sub-sealing portion 130 may be positioned on the opposite sides with the plurality of electrodes 200 therebetween, and may have shapes asymmetrical with each other.

In this case, the electrode tabs 210 (see FIG. 12) provided in the plurality of electrodes 200 may protrude in a direction not interfering with the sealing portion 120 and the sub-sealing portion 130.

The method for manufacturing the electrode assembly 10 according to the embodiment is relatively simple, compared to various kinds of methods for manufacturing an electrode assembly according to the related art. Accordingly, the manufacturing process is simplified, and the manufacturing equipment is also simplified.

Also, the separator stack 100 that does not include the electrodes 200 is manufactured first, and thus, the accurate alignment between the plurality of separators 110 is possible. In addition, the plurality of electrodes 200 are simultaneously or sequentially inserted into the separator stack 100, and thus, the accurate alignment between the plurality of electrodes 200 is possible. Accordingly, the quality and energy density of the electrode assembly 10 may be enhanced.

In addition, compared to the related art, the sealing stability of the sealing portion 120 may be enhanced, and the sealing portion 120 may prevent the plurality of electrodes 200 from being separated from the separator stack 100. Accordingly, it is possible to prevent the occurrence of a short circuit between the plurality of electrodes 200 and to improve the stability of the electrode assembly 10.

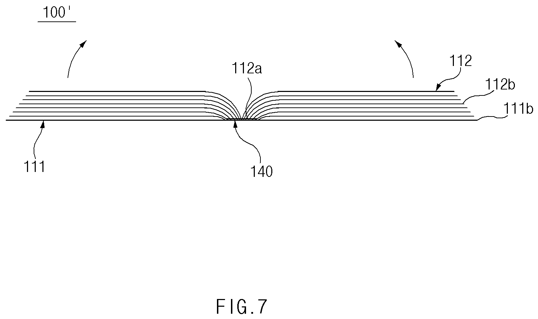

FIG. 7 is a side view of a separator stack according to another embodiment of the present invention.

A separator stack 100' according to the embodiment may include a base separator 111, a base material portion 140 located in a central region of the base separator 111, and a plurality of main separators 112 connected to the base material portion 140.

The base separator 111 may include a pair of first edges extending in a first direction and a pair of second edges 111b extending in a second direction perpendicular to the first direction. Therefore, the pair of second edges 110b of the base separator 111 may form both ends of the separator 110 in the first direction.

The first direction may be parallel to one of the longitudinal direction or width direction of the base separator 111, and the second direction may be parallel to the other one of the longitudinal direction or width direction of the base separator 111.

The base separator 111 may be a single separator or may include a pair of separators spaced apart from each other and connected to the base material portion 140 which will be described later. Hereinafter, a case in which the base separator 111 is a single separator will be described as an example.

The base material portion 140 may be provided in a central region, in the first direction, of the base separator 111. In more detail, the base material portion 140 may be provided in the central region, in the first direction, on the upper surface of the base separator 111. Also, the base material portion 140 may be elongated in the second direction. It is preferable that the width and thickness of the base material portion 140 are constant.

The base material portion 140 may be configured to fix edges 112a of the main separators 112 which will be described later, and the material thereof is not limited. For example, the base material portion 140 may include an adhesive, or include a polymer resin that can be heat-sealed.

Each of the plurality of main separators 112 may have one edge 112a connected to the base material portion 140 and the other edge 112b positioned on the opposite side from the one edge 112a. The one edge 112a and the other edge 112b may extend side-by-side in the second direction.

Hereinafter, for convenience of description, the one edge 112a is referred to as a fixed edge, and the other edge 112b is referred to as a non-fixed edge.

The fixed edge 112a of each of the main separators 112 may be connected perpendicularly to the base material portion 140.

Also, with respect to the first direction, some of plurality of main separators 112 may be spread toward one side, and the others may be spread toward the other side.

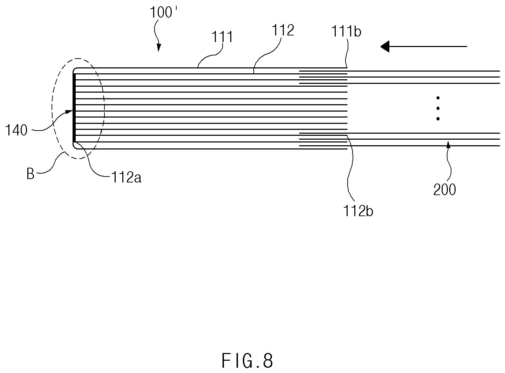

Also, the separator stack 100' may be folded about the base material portion 140. In more detail, the base separator 111 may be folded about the base material portion 140 so that the plurality of main separators 112 are gathered (see FIG. 8). Therefore, the plurality of main separators 112 may be gathered so as to face each other in the stacking direction, and one portion and another portion of the base separator 111 may form both outermost regions of the folded separator stack 100'.

That is, the separator stack 100' according to the embodiment may have a similar structure to a book in bound form. The base separator 111 may correspond to the cover of the book, and each of the main separators 112 may correspond to a page of the book.

The folded separator stack 100' will be described later in detail.

Meanwhile, non-fixed edges 112b of the plurality of main separators 112 may be positioned further inward than the second edges 111b of the base separator 111.

Also, the non-fixed edges 112b of the plurality of main separators 112 may be positioned further inward along the upward direction with respect to the stacking direction of the plurality of main separators 112. That is, the lengths between the fixed edges 112a and the non-fixed edges 112b of the plurality of main separators 112 may be reduced along the upward direction with respect to the stacking direction.

Accordingly, when the separator stack 100' is folded about the base material portion 140 (see FIG. 8), the lengths from the base material portion 140 to the plurality of non-fixed edges 112b with respect to the plurality of main separators 112 may be the same or similar to each other.

However, the embodiment is not limited thereto, and a plurality of main separators 112 having the constant length may be used. In this case, in a state in which the separator stack 100' is folded about the base material portion 140, a process of cutting a portion of the separator stack 100' may be further performed so that the lengths from the base material portion 140 to the plurality of non-fixed edges 112b are the same or similar to each other.

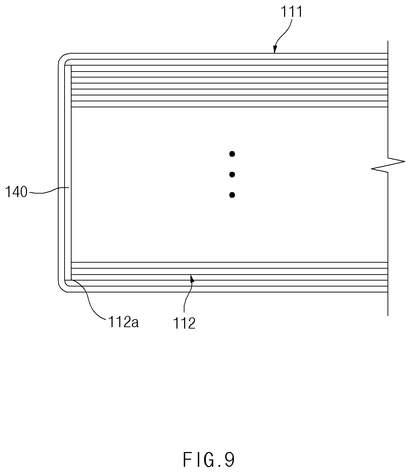

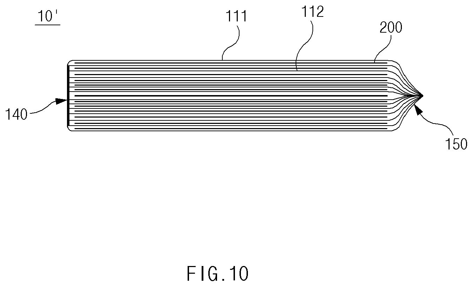

FIG. 8 is a side view illustrating a state in which a plurality of electrodes are inserted into a separator stack according to another embodiment of the present invention, FIG. 9 is an enlarged view of a region 'B' shown in FIG. 8, and FIG. 10 is a side view of an electrode assembly according to another embodiment of the present invention.

An electrode assembly 10' according to an embodiment of the present invention may include the separator stack 100' which is folded about the base material portion 140 and a plurality of electrodes 200 which are inserted between the plurality of separators 111 and 112.

Hereinafter, the separator stack 100' will be described based on a folded state.

The base material portion 120 may be positioned on one side of the separator stack 100', and the non-fixed edges 112b of the plurality of main separators 112 and the second edges 111b of the base separator 111 may be positioned on the other side.

When the base separator 111 is a single separator, a portion of the base separator 111 may cover the base material portion 120 from the outside. However, the embodiment is not limited thereto. When the base separator 111 includes a pair of separators that are connected to the base material portion 140 and spaced apart from each other, the base material portion 140 may form a portion of the perimeter of the separator stack 100'.

The shape of the base material portion 140 may vary depending on the degree to which the separator stack 100' is folded. In one example, the base material portion 140 may be formed flat as illustrated in FIG. 9. In another example, the base material portion 140 may be convexly bent or folded toward the outside of the separator stack 100'.

The thickness of the base material portion 140 may be constant with respect to the stacking direction of the plurality of main separators 112.

Also, the base material portion 140 may be positioned on one side of the plurality of electrodes 200. The plurality of electrodes 200 may be in contact with or close to the base material portion 140. The base material portion 140 may prevent the plurality of electrodes 200 from being separated from the separator stack 100'.

The plurality of electrodes 200 may be inserted between the base separator 111 and the plurality of main separators 112 included in the separator stack 100'. In more detail, both outermost electrodes 200 among the plurality of electrodes 200 may be inserted between the base separator 111 and the main separator 112, and the other electrodes 200 may be inserted between the plurality of main separators 112.

The plurality of electrodes 200 may include a plurality of positive electrodes and a plurality of negative electrodes which are positioned alternately with the separators 111 and 112 therebetween.

Each of the electrodes 200 may be formed by applying an electrode active material onto a current collector having an electrode plate shape. Also, an electrode tab 210 (see FIG. 12) may be connected to each of the electrodes 200, and the electrode tab 210 may be an uncoated portion which is not coated with the electrode active material in the current collector.

A plurality of electrode tabs 210 may protrude toward one side or both sides of the electrode assembly 10'. In more detail, the plurality of electrode tabs 210 may include positive electrode tabs connected to the positive electrodes and negative electrode tabs connected to the negative electrodes. The positive electrode tabs and the negative electrode tabs may protrude in parallel to each other or in opposite directions.

The plurality of electrode tabs 210 may protrude in a direction not interfering with the base material portion 140 of the separator stack 100' and a sub-sealing portion 150 thereof which will be described later.

Meanwhile, the separator stack 100' may include a sub-sealing portion 150.

The sub-sealing portion 150 may be positioned on the opposite side from the base material portion 140 with the plurality of electrodes 200 therebetween. That is, the base material portion 140 may be positioned on one side of the plurality of electrodes 200, and the sub-sealing portion 150 may be positioned on the other side of the plurality of electrodes 200.

The sub-sealing portion 150 may be formed by sealing the plurality of separators 111 and 112 to each other. In more detail, the sub-sealing portion 130 may be formed by sealing the non-fixed edges 112b of the plurality of main separators 112 and the second edges 111b of the base separator 111 to each other.

More specifically, in the sub-sealing portion 150, the non-fixed edges 112b of the plurality of main separators 112 and the second edges 111b of the base separator 111 may be gathered at the central region and heat-sealed by a separate sealing tool (not shown) or may be folded in random directions and heat-sealed. Therefore, when the sub-sealing portion 150 is formed, the sub-sealing portion 150 inevitably has a shape asymmetrical with the base material portion 140.

However, the sub-sealing portion 150 may not be formed in the separator stack 100'.

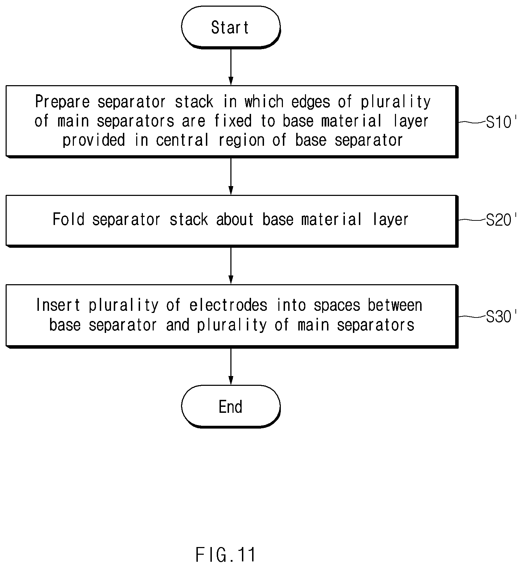

FIG. 11 is a flowchart of a method for manufacturing an electrode assembly according to another embodiment of the present invention.

A method for manufacturing an electrode assembly 10' according to an embodiment of the present invention may include preparing a separator stack 100' in which edges 112a of a plurality of main separators 112 are fixed to a base material portion 140 provided in a central region of a base separator 111 (S10'); folding the separator stack 100' about the base material portion 140 (S20'); and inserting a plurality of electrodes 200 into spaces between the base separator 111 and the plurality of main separators 112 (S30').

During the preparing of the separator stack 100' (S10'), the base material portion 140 may be provided in the central region, in a first direction, of the base separator 111, and may be elongated in a second direction perpendicular to the first direction. Also, the base material portion 140 may have the constant width and thickness.

In one example, the base material portion 140 may be formed by applying an adhesive onto a central region of the upper surface of the base separator 111.

In another example, an adhesive member or a polymer resin member, which is provided separately from the base separator 111, is attached or bonded to the central region of the upper surface of the base separator 111, thereby forming the base material portion 140.

In another example, a pair of separators spaced apart from each other in the first direction may be connected to an adhesive member or a polymer resin member provided separately. In this case, the pair of separators may form the base separator 111, and the adhesive member or the polymer resin member may form the base material portion 140.

During the folding of the separator stack 100' (S20), the separator stack 100' may be folded about the base material portion 140 that is elongated in the second direction. In more detail, the separator stack 100' may be folded in a direction in which the plurality of main separators 112 are gathered to face each other.

Therefore, when the separator stack 100 is folded, the base material portion 140 may be positioned on one side of the separator stack 100', and the thickness of the base material portion 140 may be constant with respect to the stacking direction of the separator stack 100'.

Also, the shape of the base material portion 140 may vary depending on the degree to which the separator stack 100' is folded.

In one example, when the separator stack 100' is folded, the base material portion 140 itself may not be folded, and thus, the shape of the base material portion 140 may be maintained. In this case, the base material portion 140 may be flat.

In another example, when the separator stack 100' is folded, the base material portion 140 may be bent together with the base separator 111. In this case, the base material portion 140 may be convexly bent or folded toward the outside of the separator stack 100'.

During the inserting of the plurality of electrodes 200 (S30'), the plurality of electrodes 200 may be simultaneously inserted or sequentially inserted into the separator stack 100'.

For example, a plurality of guide slits (not shown) may be inserted between the plurality of separators 111 and 112, and each of the electrodes 200 may be inserted into the separator stack 100' via the guide slit. Subsequently, the guide slits may be removed.

Accordingly, the base material portion 140 of the separator stack 100' may be positioned on one side of the plurality of electrodes 200, and may be in contact with or close to the plurality of electrodes 200.

Also, electrode tabs 210 (see FIG. 12) provided in the plurality of electrodes 200 may protrude to the outside of the separator stack 100'. In more detail, the electrode tabs 210 may protrude in a direction not interfering with the base material portion 140.

Meanwhile, although not illustrated in FIG. 11, the method for manufacturing the electrode assembly 10' according to the embodiment may further include forming a sub-sealing portion 150 by sealing the plurality of separators 111 and 112 to each other on the opposite side from the base material portion 140.

In more detail, the second edges 111b of the base separator 111 and the non-fixed edges 112b of the plurality of main separators 112 may be sealed to each other by a separate sealing tool (not shown) to form the sub-sealing portion 150. The base material portion 140 and the sub-sealing portion 150 may be positioned on the opposite sides with the plurality of electrodes 200 therebetween, and may have shapes asymmetrical with each other.

In this case, the electrode tabs 210 (see FIG. 12) provided in the plurality of electrodes 200 may protrude in a direction not interfering with the base material portion 140 and the sub-sealing portion 150.

In the method for manufacturing the electrode assembly 10' according to the embodiment of the present invention, the separator stack 100' that does not include the electrodes 200 is manufactured first, and thus, the accurate alignment between the plurality of separators 111 and 112 is possible. In addition, the plurality of electrodes 200 are simultaneously or sequentially inserted into the separator stack 100', and thus, the accurate alignment between the plurality of electrodes 200 is possible. Accordingly, the quality and energy density of the electrode assembly 10' may be enhanced.

In addition, the sealing stability of the base material portion 140 may be enhanced, and the base material portion 140 may prevent the plurality of electrodes 200 from being separated from the separator stack 100'. Accordingly, it is possible to prevent the occurrence of a short circuit between the plurality of electrodes 200 and to improve the stability of the electrode assembly 10'.

In addition, the thickness of the base material portion 140 is constant, and thus, the alignment of the plurality of electrodes 200 may be more accurate. Therefore, an empty space between the base material portion 140 and the plurality of electrodes 200 may be minimized, the energy density of the electrode assembly 10' may be more enhanced, and the plurality of electrodes 200 may be more efficiently cooled.

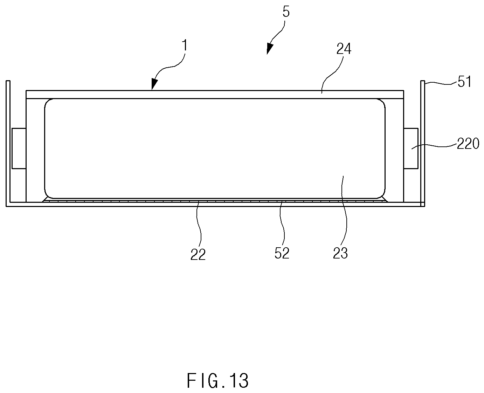

FIG. 12 is an exploded perspective view of a secondary battery that includes an electrode assembly according to an embodiment of the present invention, and FIG. 13 is a schematic view of a battery module that includes the secondary battery illustrated in FIG. 12.

FIG. 12 will be illustrated on the basis of the electrode assembly 10 according to an embodiment of the present invention. From this, one skilled in the art may easily understand a case about the electrode assembly 10' (see FIG. 10 ) according to another embodiment of the present invention.

The electrode assembly 10 according to an embodiment of the present invention may be provided with the plurality of electrode tabs 210. The electrode tabs 210 may be respectively connected to the plurality of electrodes 200 included in the electrode assembly 10, and may protrude in a direction not interfering with the sealing portion 120 and the sub-sealing portion 130.

A lead 220 may be connected to the plurality of electrode tabs 210. The lead 220 may be bonded to the plurality of electrode tabs 210 by spot welding or the like, and may serve as a passage for supplying power to the outside of the electrode assembly 10 in conjunction with the plurality of electrode tabs 210.

A portion of the perimeter of the lead 220 may be surrounded by an insulating member 230. For example, the insulating member 230 may include an insulating tape. The insulating member 230 may insulate the lead 220 from a terrace 24 of a pouch-type battery case 20 which will be described later, and a portion of the lead 220 may protrude to the outside of the pouch-type battery case 20.

As the electrode assembly 10 is accommodated in the pouch-type battery case 20 (hereinafter, referred to as a 'battery case'), a secondary battery 1 may be formed. That is, the secondary battery 1 may include the electrode assembly 10 and the battery case 20.

Meanwhile, the battery case 20 may be formed by sealing a pair of cases 21 connected by a folding portion 22 to each other. Hereinafter, the configuration of each case 21 will be described on the basis of a state in which the battery case 20 is unfolded. The 'state in which the battery case 20 is unfolded' represents a state in which the battery case 20 is spread out as illustrated in FIG. 12 by removing certain bonding or sealing present in the battery case 20.

Each case 21 may include a cup portion 23 having a recessed shape and a terrace 24 expanding around the cup portion 23. However, the embodiment is not limited thereto, and the cup portion 23 may be formed in only one of the pair of cases 21.

In a state in which the electrode assembly 10 is placed on one cup portion 23, the battery case 20 may be folded about the folding portion 22. The terraces 24 of the pair of cases 21 may be brought into contact with and sealed to each other. Therefore, the electrode assembly 10 may be accommodated in an accommodation space formed by the pair of cup portions 23.

Also, a portion, which is positioned on the opposite side from the folding portion 22, of the terraces 24 sealed to each other may be folded at least once and, for example, double side folding (DSF) may be made thereon. This is well known in the art, and thus, one skilled in the art can easily understand this technique.

The sealing portion 120 of the electrode assembly 10 may be located to face the folding portion 22 of the battery case 20. In more detail, the sealing portion 120 of the electrode assembly 10 may face the outer wall, on a side of the folding portion 22, among a plurality of outer walls that form the perimeter of the cup portion 23. Also, the sub-sealing portion 130 of the electrode assembly 10 may face the outer wall, which is positioned on the opposite side from the folding portion 22, among the plurality of outer walls that form the perimeter of the cup portion 23.

For the electrode assembly 10' (see FIG. 10) according to another embodiment of the present invention, the base material portion 140 may be located to face the folding portion 22 of the battery case 20. In more detail, the base material portion 140 of the electrode assembly 10' may face the outer wall, on a side of the folding portion 22, among a plurality of outer walls that form the perimeter of the cup portion 23. Also, the sub-sealing portion 150 of the electrode assembly 10' may face the outer wall, which is positioned on the opposite side from the folding portion 22, among the plurality of outer walls that form the perimeter of the cup portion 23.

Also, a battery module 5 may include a plurality of secondary batteries 1 stacked on each other and a housing 51 for accommodating the plurality of secondary batteries 1.

A cooling unit 52 having high thermal conductivity may be provided on the bottom surface inside the housing 51, and each of the secondary batteries 1 may stand such that the folding portion 22 thereof is in contact with the cooling unit 52. For example, the cooling unit 52 may include thermal grease.

As described above, the terrace 24 positioned on the opposite side from the folding portion 22 in the battery case 20 is folded at least once, and thus may have a relatively larger thickness than the folding portion 22. Therefore, in order to efficiently dissipate heat of the plurality of electrodes 200 included in the electrode assembly 10, it is more effective to bring the folding portion 22 into contact with the cooling unit 52.

Also, referring to FIG. 5, the thickness of the sealing portion 120 may be generally less than the thickness of the sub-sealing portion 130. Therefore, the sealing portion 120 of the electrode assembly 10 is disposed to face the folding portion 22 of the battery case 20, and thus, the heat of the plurality of electrodes 200 may be efficiently dissipated.

Similarly, referring to FIG. 10, the thickness of the base material portion 140 may be generally less than the thickness of the sub-sealing portion 150. Therefore, the base material portion 140 of the electrode assembly 10' according to another embodiment of the present invention is disposed to face the folding portion 22 of the battery case 20, and thus, the heat of the plurality of electrodes 200 may be efficiently dissipated.

In particular, the base material portion 140 of the electrode assembly 10' according to another embodiment of the present invention has a small and uniform thickness and thus may have higher heat dissipating efficiency with respect to the plurality of electrodes 200 than the electrode assembly 10 according to an embodiment.

The technical ideas of the present invention have been described merely for illustrative purposes, and those skilled in the art will appreciate that various changes and modifications are possible without departing from the essential features of the present invention.

Thus, the embodiments of the present invention are to be considered illustrative and not restrictive, and the technical idea of the present invention is not limited to the foregoing embodiments.

The protective scope of the present invention is defined by the appended claims, and all technical ideas within their equivalents should be interpreted as being included in the scope of the present invention.

### [Description of the Symbols]

| | | | |
|---|---|---|---|
| 100: | Separator stack | 110: | Separator |
| 111: | Base separator | 112: | Main separator |
| 120: | Sealing portion | 130: | Sub-sealing portion |
| 140: | Base material portion | 150: | Sub-sealing portion |

## Claims

1. A separator stack comprising:
a plurality of separators which are stacked on each other and each of which has a pair of first edges extending in a first direction and a pair of second edges extending in a second direction perpendicular to the first direction; and
a sealing portion which is elongated in the second direction and formed as central regions of the plurality of separators in the first direction are sealed to each other.

2. The separator stack of claim 1, wherein the width of the sealing portion in the first direction is reduced along the upward direction with respect to a stacking direction of the plurality of separators.

3. The separator stack of claim 1, wherein the pairs of second edges of the plurality of separators are positioned further inward along the upward direction with respect to a stacking direction of the plurality of separators.

4. The separator stack of claim 1, wherein the sealing portion has a shape symmetrical with respect to the first direction.

5. The separator stack of claim 1, wherein the plurality of separators are folded about the sealing portion.

6. An electrode assembly comprising:
a separator stack which has a sealing portion formed in central regions of a plurality of separators stacked on each other, wherein the separator stack is folded about the sealing portion; and
a plurality of electrodes inserted between the plurality of separators,
wherein the sealing portion is positioned on one side of the plurality of electrodes.

7. The electrode assembly of claim 6, wherein at least some of the plurality of electrodes are in contact with or close to the sealing portion.

8. The electrode assembly of claim 6, wherein the thickness of the sealing portion is increased toward the central regions with respect to a stacking direction of the separator stack.

9. The electrode assembly of claim 6, wherein the sealing portion has a shape symmetrical with respect to a stacking direction of the separator stack.

10. The electrode assembly of claim 6, wherein the outer surface of the sealing portion is flat, or convexly bent or folded toward the outside of the separator stack.

11. The electrode assembly of claim 6, wherein the separator stack has a sub-sealing portion which is positioned on the other side of the plurality of electrodes and in which the plurality of separators are sealed to each other, and
the sub-sealing portion has a shape asymmetrical with the sealing portion.

12. A separator stack comprising:
a base separator which has a pair of first edges extending in a first direction and a pair of second edges extending in a second direction perpendicular to the first direction; and
a base material portion which is provided in a central region, in the first direction, of the base separator and elongated in the second direction; and
a plurality of main separators which have fixed edges connected to the base material portion.

13. The separator stack of claim 12, wherein with respect to the first direction, some of the plurality of main separators are spread toward one side, and the others are spread toward the other side.

14. The separator stack of claim 12, wherein the base separator is folded about the base material portion so that the plurality of main separators are gathered.

15. The separator stack of claim 12, wherein non-fixed edges of the plurality of main separators on the opposite side from the fixed edges are positioned further inward along the upward direction with respect to a stacking direction.

16. An electrode assembly comprising:
a separator stack in which edges of a plurality of main separators are fixed to a base material portion provided in a central region of a base separator, wherein the separator stack is folded about the base material portion; and
a plurality of electrodes which are inserted between the base separator and the plurality of main separators,
wherein the base material portion is positioned on one side of the plurality of electrodes.

17. The electrode assembly of claim 16, wherein the plurality of electrodes are in contact with or close to the base material portion.

18. The electrode assembly of claim 16, wherein the thickness of the base material portion is constant with respect to the stacking direction of the plurality of main separators.

19. The electrode assembly of claim 16, wherein the base material portion is flat, or convexly bent or folded toward the outside of the separator stack.

20. The electrode assembly of claim 16, wherein the separator stack has a sub-sealing portion which is positioned on the other side of the plurality of electrodes and in which the base separator and the plurality of separators are fused to each other, and
the sub-sealing portion has a shape asymmetrical with the base material portion.

21. An electrode assembly manufacturing method comprising:
preparing a separator stack in which central regions of a plurality of separators stacked on each other are sealed to each other to form a sealing portion;
folding the separator stack about the sealing portion; and
inserting a plurality of electrodes into spaces between the plurality of separators.

22. The electrode assembly manufacturing method of claim 21, wherein during the preparing of the separator stack,
an operation of stacking another separator on the upper side of one separator and an operation of fusing central regions of the one separator and another separator to each other to form a sealing portion are repeated,
wherein the width of the sealing portion is reduced along the upward direction with respect to the stacking direction of the separator stack.

23. The electrode assembly manufacturing apparatus of claim 21, further comprising forming a sub-sealing portion by sealing the plurality of separators to each other on the opposite side from the sealing portion.

24. An electrode assembly manufacturing method comprising:
preparing a separator stack in which edges of a plurality of main separators are fixed to a base material portion provided in a central region of a base separator;
folding the separator stack about the base material portion; and
inserting a plurality of electrodes into spaces between the base separator and the plurality of main separators.

25. The electrode assembly manufacturing method of claim 24, further comprising sealing edges of the base separator and plurality of main separators positioned on the opposite side from the base material portion to each other.
